# FASCICULE DE BREVET EUROPEEN

(11) **EP 1 159 642 B1**
(45) Date de publication et mention de la délivrance du brevet: **13.08.2003**
(21) Numéro de dépôt: 00906419.7
(22) Date de dépôt: 17.02.2000
(51) Int. Cl.: G02B 6/38

(54) **CONNECTEUR OPTIQUE PERFECTIONNE, DESTINE EN PARTICULIER A OPERER DANS UN ENVIRONNEMENT DE HAUTE PRESSION**
VERBESSERTER OPTISCHER STECKER, INSBESONDERE ZUR ANWENDUNG IN EINER UMGEBUNG HOHEN DRUCKES GEEIGNET
IMPROVED OPTICAL CONNECTOR, PARTICULARLY FOR OPERATING IN HIGH PRESSURE ENVIRONMENT

(30) Priorité: 19.02.1999 FR 9902097
(43) Date de publication de la demande: 05.12.2001
(73) Titulaire: Alliance Technique Industrielle, 91080 Courcouronnes (FR)
(72) Inventeur: MALAVIEILLE, François-Louis, F-92290 Châtenay-Malabry (FR); REZGUI, Fadhel, F-92330 Sceaux (FR)
(74) Mandataire: Plaçais, Jean-Yves
(86) Numéro de dépôt international: FR0000401
(87) Numéro de publication internationale: WO00049440

(56) Documents cités:
- DE-A- 2 516 858
- US-A- 4 676 588
- US-A- 4 850 670
- PATENT ABSTRACTS OF JAPAN vol. 011, no. 252 (P-605), 15 août 1987 (1987-08-15) & JP 62 056907 A (NIPPON TELEGR & TELEPH CORP), 12 mars 1987 (1987-03-12)
- PATENT ABSTRACTS OF JAPAN vol. 014, no. 352 (P-1085), 30 juillet 1990 (1990-07-30) & JP 02 128144 A (FURUKAWA ELECTRIC CO LTD:THE), 16 mai 1990 (1990-05-16)
- PATENT ABSTRACTS OF JAPAN vol. 017, no. 669 (P-1657), 9 décembre 1993 (1993-12-09) & JP 05 224094 A (SUMITOMO ELECTRIC IND LTD;OTHERS: 01), 3 septembre 1993 (1993-09-03)

## Description

La présente invention concerne le domaine des connexions optiques. Elle concerne plus particulièrement un connecteur entre deux fibres optiques, destiné à opérer dans des milieux ambiants agressifs et/ou polluants, sous forte pression.

Une connexion entre deux fibres optiques est effectuée en disposant les extrémités respectives des fibres en regard l'une de l'autre et, de préférence, sensiblement en contact.

Cependant, le milieu environnant peut s'infiltrer entre les deux fibres et générer ainsi des pertes optiques. Il est généralement souhaité une connexion étanche entre les deux fibres de manière à éviter une contamination ou une pollution de leur extrémité.

Les connecteurs habituellement utilisés pour de telles applications présentent des structures complexes qui grèvent leurs coûts de fabrication (joints d'étanchéité et/ou clapets anti-retour, le plus souvent). Par ailleurs, cette structure est généralement volumineuse et rend l'utilisation d'un tel connecteur rédhibitoire pour certaines applications.

Le document EP 0374939A décrit un connecteur à fibre optique comprenant un tube capillaire pour l'alignement des fibres optiques et un gel optique se maintenant dans l'espace de couplage optique entre les fibres.

La présente invention comme définie dans la revendication 1 vient améliorer la situation.

Elle porte alors sur un connecteur pour raccorder deux fibres optiques destinées à coopérer l'une avec l'autre, notamment dans un milieu environnant de haute pression. Ce connecteur comprend des moyens de maintien des extrémités respectives des fibres, sensiblement en regard l'une de l'autre.

Selon une caractéristique générale de l'invention, le connecteur comprend en outre un manchon entourant les extrémités des fibres, ainsi qu'un gel sensiblement translucide, disposé dans le manchon et de fluidité choisie pour baigner sensiblement l'espace séparant les extrémités des fibres et étancher sensiblement cet espace par rapport au milieu environnant. La pression ambiante agit alors sur au moins une extrémité libre du manchon en maintenant sensiblement le gel dans le manchon.

Avantageusement, le gel est d'indice de réfraction choisi pour limiter les pertes optiques d'une extrémité de fibre à l'autre, en particulier les pertes de Fresnel.

Préférentiellement, ce gel est réalisé dans un matériau comportant des silicones.

Selon une autre caractéristique avantageuse de l'invention, la longueur et le diamètre général du manchon sont choisis, en fonction des longueurs des extrémités des fibres, de sorte que le manchon forme un réservoir pour le gel en permettant au gel de baigner l'interface entre les fibres au moment de la connexion.

D'autres avantages et caractéristiques de la présente invention apparaîtront à l'examen de la description détaillée ci-après, et des dessins annexés, sur lesquels :
- la figure 1 représente schématiquement une installation pour effectuer des mesures optiques en milieu environnant de haute pression, et comprenant un connecteur optique selon l'invention,
- la figure 2 représente une vue détaillée du connecteur selon l'invention, avant le raccord des fibres optiques précitées, et
- la figure 3 représente une vue détaillée du connecteur, avec les extrémités respectives des fibres optiques raccordées.

Les dessins contiennent pour l'essentiel des éléments de caractère certain. Ils pourront non seulement servir à mieux faire comprendre la présente invention, mais aussi contribuer à sa définition, le cas échéant.

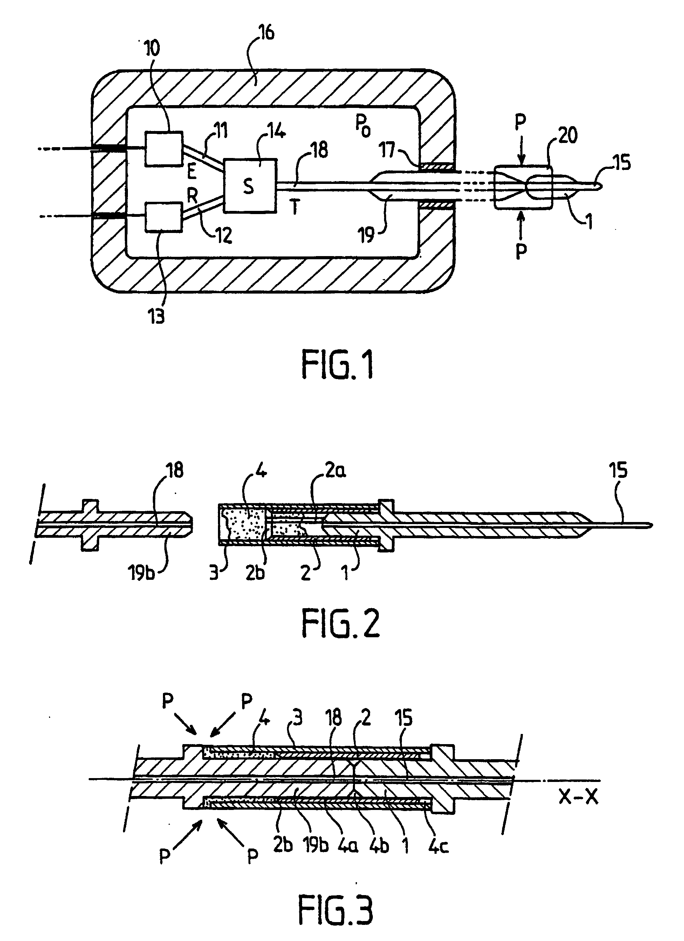

On se réfère tout d'abord à la figure 1 pour décrire une installation de mesure, par moyens optiques, du degré de salinité de fonds marins dans l'exemple décrit.

L'installation comprend une source émettrice 10, munie d'une diode émettrice couplée à une première branche de l'installation 11 comportant une fibre optique d'émission E. Cette fibre d'émission est connectée par ailleurs à une fibre de transmission 18.

Le faisceau lumineux qu'émet la source 10 est véhiculé par la fibre de transmission 18, vers une fibre de mesure 15, en contact direct avec le milieu environnant de haute pression (flèches P). Dans l'exemple décrit, la pointe de la fibre de mesure 15 est profilée pour mesurer des variations d'indice du milieu ambiant, ce qui permet de détecter des régions de plus grande salinité.

En pratique, un faisceau incident est plus ou moins réfléchi par le dioptre que forme la fibre de mesure 15 et le milieu ambiant, en fonction des indices de réfraction respectifs de la fibre et du milieu. C'est ainsi que pour un rayon d'incidence supérieure à l'incidence de Brewster, le rayon incident subit au moins une réflexion et est véhiculé en retour par la fibre de transmission 18, jusqu'à un séparateur 14 (lame semi-réfléchissante ou autre) qui oriente le faisceau réfléchi vers une seconde branche de réception R que comporte l'installation. Cette branche de réception R est munie d'une fibre 12, laquelle est connectée à un récepteur 13 (photo-détecteur ou autre).

En fonction de l'intensité lumineuse du faisceau réfléchi, il est possible d'évaluer l'indice de réfraction du milieu environnant la fibre de mesure 15, et de connaître, le cas échéant, sa composition.

L'installation comporte enfin des câbles (électriques dans l'exemple) connectés à la source d'émission 10 pour alimenter la diode précitée, et au récepteur 13 pour exploiter un signal représentatif de l'intensité du faisceau réfléchi.

L'ensemble des éléments de l'installation, hormis la partie aval de la fibre de détection 18 et la fibre de mesure 15, est disposé dans un caisson hermétique (caisson isobare), dans lequel baigne principalement de l'air de pression P₀, sensiblement voisine de la pression atmosphérique. La partie amont de la fibre de transmission 18 (côté séparateur 14) baigne dans le caisson hermétique 16, tandis que sa partie aval (côté fibre de détection 15) est logée dans une gaine de protection 19. L'herméticité du caisson 16 est notamment assurée par des joints d'étanchéité 17 entourant la gaine de protection 19.

La fibre de transmission, munie de sa gaine, est alors destinée à être acheminée dans le milieu environnant de haute pression P, vers un connecteur 20 pour être raccordée à la fibre optique de mesure 15.

Dans l'application visée, le milieu environnant (eau de mer) comporte des contaminants notoires des fibres optiques usuelles, réalisées généralement dans un matériau comportant de la silice et des chlorures. C'est ainsi que la fibre optique de mesure 15, destinée à coopérer directement avec le milieu, est habituellement réalisée dans un matériau plus résistant, par exemple en saphir, ou encore comportant une couche de protection de diamant. Cependant, de tels matériaux sont relativement coûteux et la fibre de mesure 15 doit être de longueur réduite.

En revanche, la partie aval de la fibre de transmission 18 doit être de longueur suffisante, notamment pour préserver le caisson hermétique 16 de chocs éventuels contre le fond (rochers, sable). Sa gaine de protection 19 est alors réalisée préférentiellement dans un matériau résistant à l'attaque de l'eau de mer, tandis que la fibre de transmission peut être réalisée dans un matériau classique (comportant de la silice et des chlorures).

Cependant, pour éviter notamment une contamination de l'extrémité de la fibre de transmission 18, en regard de la fibre de mesure 15, il est nécessaire de prévoir un connecteur étanche 20 entre les deux fibres, compte tenu notamment de la haute pression P du milieu ambiant (quelques centaines de bars).

On se réfère alors à la figure 2 pour décrire un connecteur selon l'invention, pour raccorder les deux fibres de transmission 18 et de mesure 15.

La gaine de protection 19 de la fibre de transmission 18 se prolonge par un embout de centrage 19b. En vue de faciliter la connexion entre les fibres, la fibre de mesure 15 est aussi logée dans un embout de centrage 1, sensiblement symétrique de l'embout 19b. Dans l'exemple, les embouts sont de forme cylindrique creuse pour loger étroitement les extrémités des fibres 18 et 15. Généralement, les fibres sont immobilisées dans les embouts par collage et leurs faces d'extrémité sont polies de façon à limiter les pertes optiques en émission et en réception.

Le connecteur comporte une bague élastique 2, de forme sensiblement cylindrique creuse et de diamètre général sensiblement inférieur aux diamètres des extrémités des embouts 1 et 19b. La bague 2 est destinée à maintenir les extrémités respectives des embouts 1 et 19b, l'un en regard de l'autre, de préférence, sensiblement en contact. Les axes des embouts sont alors sensiblement confondus avec l'axe X-X d'alignement des fibres (figure 3).

Pour introduire les embouts 1 et 19b dans la bague 2, celle-ci est préférentiellement réalisée dans un matériau métallique et comporte une fente qui s'étend le long de l'une de ses génératrices (parallèle à l'axe X-X), d'un embout à l'autre. Cette fente 2a confère alors à la bague une élasticité par effet "ressort". La bague 2 est initialement enfichée autour de l'extrémité de l'embout 1 de la fibre de détection 15. Ensuite, l'extrémité de l'embout 19b portant la fibre de transmission 18, est introduite en force dans la bague 2, laquelle loge alors étroitement les extrémités respectives des embouts, l'une en regard de l'autre.

Un manchon 3, de forme sensiblement cylindrique creuse vient entourer au préalable la bague 2, ainsi que les extrémités des embouts 1 et 19b. En outre, un gel 4 d'adaptation d'indice de réfraction est appliqué à l'intérieur du manchon, celui-ci formant réservoir de gel 4.

Lorsque l'embout 19b de la fibre de transmission 18 est introduit dans le manchon 3, puis dans la bague fendue 2, le gel 4, contenu dans le réservoir formé par le manchon 3, se répartit par effet piston dans toutes les interfaces de la connexion et en particulier dans l'interface 4b séparant les deux fibres 15 et 18. La fente 2a de la bague 2 constitue alors une ouverture pour le reflux du gel 4 dont le surplus s'accumule dans la cavité cylindrique prévue entre le manchon 3 et l'embout 19b (côté fibre de transmission 18), cette cavité formant à nouveau un réservoir de gel 4.

La Demanderesse a constaté que l'un des nombreux avantages que procure la présente invention consiste alors en ce que ce reflux de gel pendant la connexion chasse des impuretés éventuellement présentes dans l'interface 4b, celles-ci étant entraînées par le gel refoulé vers l'extérieur de la bague 2. Ainsi, la connexion des fibres, par un connecteur selon l'invention, assure en outre le nettoyage de leur extrémité.

De préférence, la bague 2 comporte des faces d'extrémités 2b sensiblement évasées vers l'extérieur, formant un chanfrein pour faciliter l'introduction de l'embout 19b dans la bague.

Par ailleurs, l'une des extrémités du manchon 3 (côté fibre de détection 15, dans l'exemple décrit) est préférentiellement fermée de façon étanche sur l'un des embouts (embout 1).

Comme le montre la figure 3, la pression du milieu extérieur (flèches P) agit sur l'extrémité libre du manchon 3 (côté fibre de transmission 18) en maintenant le gel 4 dans le manchon. De plus, l'eau à haute pression peut s'infiltrer par cette extrémité libre en poussant le gel vers l'espace 4b entre les extrémités des embouts. Le diamètre général du manchon est choisi, en fonction de la forme des embouts, de sorte que le gel baigne en particulier l'interface 4b.

Par ailleurs, le diamètre du manchon est optimisé en fonction de la fluidité du gel 4. C'est ainsi qu'une fois les fibres connectées, s'il advient que l'espace 4b entre les fibres augmente sensiblement, une partie du gel 4 provenant en particulier de la cavité cylindrique formant réservoir, vient par capillarité occuper en complément toute l'interface 4b.

Préférentiellement, le manchon 3 est réalisé dans un matériau comportant des polymères fluorés, de type KYNAR (marque déposée) thermo-rétractable, et l'une de ses extrémités est fermée par thermo-rétraction sur l'embout 1 de la fibre de détection 15.

Ainsi, le milieu environnant, de haute pression, contribue à étancher la connexion entre les fibres, en refoulant le gel vers l'intérieur de la bague, en particulier entre les deux embouts. Le gel, lui-même soumis à la pression extérieure P, ne fuit pas.

Avantageusement, ce gel, réalisé dans une matière comportant des silicones, résiste à l'eau de mer (non lavable), ne coagule pas et se dilate ou se rétracte peu en fonction des variations de température ou de pression éventuelles. Ainsi, les seuls dioptres formés entre les deux fibres sont les interfaces entre le gel et les extrémités respectives des fibres. Par ailleurs, l'indice de réfraction du gel est choisi de façon à limiter les pertes optiques liées à la connexion (pertes de Fresnel). En effet, les rayons traversant le gel restent concentrés sur l'axe X-X.

Selon un autre avantage que procure la présente invention, le connecteur ainsi formé présente une structure générale peu volumineuse, et, en particulier, un profilé assez fin pour ne pas engendrer des perturbations sur les mesures, qui résulteraient d'une variation de l'écoulement du milieu environnant, induite par le connecteur.

Par ailleurs, la simplicité du montage du connecteur, dans l'exemple décrit ci-avant, permet un remplacement rapide de la sonde de mesure de l'installation (fibre de mesure 15, embout de centrage 1, bague 2 et manchon 3), si la fibre de détection 15, réalisée en saphir dans l'exemple décrit, se brise à la suite d'un choc.

Bien entendu, la présente invention ne se limite pas à la forme de réalisation décrite ci-avant à titre d'exemple. Elle s'étend à d'autres variantes.

Ainsi on comprendra que la fibre de mesure 15 peut effectuer des mesures différentes de celles d'un indice de réfraction, par exemple des mesures de fluorescence, des mesures d'ellipsométrie ou autres. Par exemple, dans le cas de mesures de fluorescence, le séparateur 14 de la figure 1 peut comporter un filtre optique interférentiel, centré préférentiellement sur la longueur d'onde d'émission de la diode précitée. Un tel filtre transmet principalement la longueur d'onde de la diode et réfléchit sensiblement la longueur d'onde de fluorescence. Avantageusement, le gel 4 conserve les polarisations des faisceaux émis et reçus. Ainsi, il est en outre possible d'effectuer les mesures d'ellipsométrie précitées, en modulant notamment la polarisation du faisceau émis.

Par ailleurs, les moyens de maintien des fibres en vis à vis l'une de l'autre (bague fendue 2 et embouts de centrage 1 et 19b) sont décrits ci-avant à titre d'exemple. Tout autre type de moyens de maintien des fibres peuvent être envisagés, à condition que ceux-ci soient suffisamment peu étanches (comme la bague fendue 2 dans l'exemple) pour permettre au milieu environnant d'exercer une pression sur les extrémités du manchon et sur le gel, en permettant en particulier au gel de baigner l'interface entre les deux extrémités des fibres 15 et 18.

Les matériaux dans lesquels sont réalisés les éléments du connecteur 20, sont cités ci-avant à titre d'exemple. Cependant, le gel, réalisé dans un matériau comportant des silicones, présente les avantages décrits ci-avant (peu lavable par l'eau de mer, peu coagulant, fluidité adéquate). Par ailleurs, le manchon réalisé en KYNAR, ainsi que les embouts de centrage inoxydables, subissent peu d'attaques chimiques par l'eau de mer, de façon générale.

Bien entendu, les formes cylindriques des différents éléments du connecteur sont décrites ci-avant à titre d'exemple, et sont susceptibles de présenter des variantes.

En outre, l'application du connecteur selon l'invention à la mesure du degré de salinité des fonds marins à partir de l'indice de réfraction de l'eau de mer, est décrite ci-avant à titre d'exemple. Elle trouve aussi des applications dans d'autres domaines, tels que l'agro-alimentaire (par exemple dans la mesure du taux de beurre dans le lait), ou dans l'étude de la composition de milieux hétérogènes (comportant par exemple des gaz, de l'eau et/ou des huiles, d'indices de réfraction respectifs différents).

Dans l'application décrite ci-avant à titre d'exemple, l'une des fibres connectées 15 comprend, à distance du connecteur, une extrémité comportant un capteur optique, pour mesurer des variations d'indice de réfraction. En variante, le connecteur selon l'invention peut s'appliquer aussi à la connexion entre deux fibres de transmission, par exemple.

Enfin, la présente invention peut viser en outre un procédé de connexion avec un connecteur selon l'invention, comportant notamment l'étape d'introduction de l'embout 19b dans le manchon 3 comprenant le gel 4 (figures 2 et 3).

## Revendications

1. Connecteur à fibres optiques (15, 18), notamment pour ambiances sous haute pression (P), du type comprenant des moyens de maintien (1, 2, 19b) des extrémités respectives des fibres, sensiblement en regard l'une de l'autre,
comprenant en outre un manchon (3) entourant les extrémités des fibres, ainsi qu'un gel (4) sensiblement translucide, disposé dans le manchon et de fluidité choisie pour baigner sensiblement l'espace (4b) séparant les extrémités des fibres (15, 18) et étancher sensiblement ledit espace (4b) par rapport au milieu environnant en se maintenant dans ledit espace (4b), tandis que la pression ambiante agit sur au moins une extrémité libre du manchon (3) en maintenant sensiblement le gel (4) dans le manchon, **caractérisé**
**en ce qu'**il comporte des embouts de centrage (1, 19b), sensiblement cylindriques creux et logeant chacun, à immobilisation, l'extrémité d'une fibre (15, 18) et en ce que les moyens de maintien comprennent une bague (2) sensiblement élastique, de diamètre général sensiblement inférieur aux diamètres des embouts de centrage (1, 19b), pour loger étroitement les extrémités respectives des embouts sensiblement en regard l'un de l'autre, tandis que le manchon (3) entoure ladite bague (2).

2. Connecteur selon la revendication 1, **caractérisé en ce que** le gel (4) est d'indice de réfraction choisi pour limiter les pertes optiques d'une extrémité de fibre à l'autre.

3. Connecteur selon la revendication 2, **caractérisé en ce que** le gel (4) est réalisé dans un matériau comportant des silicones.

4. Connecteur selon l'une des revendications précédentes, **caractérisé en ce que** la bague est de forme sensiblement cylindrique creuse.

5. Connecteur selon la revendication 4, **caractérisé en ce que** la bague (2) est munie d'une ouverture (2a) formant un passage pour le gel (4).

6. Connecteur selon la revendication 5, **caractérisé en ce que** la bague (2) comporte une fente (2a) s'étendant sensiblement d'un embout (19b) à l'autre (1).

7. Connecteur selon l'une des revendications précédentes, **caractérisé en ce que** le diamètre général du manchon (3) est choisi de sorte que le gel (4) est apte à se maintenir au moins entre les extrémités respectives des fibres (15, 18), ainsi que dans une cavité communiquant avec le milieu environnant, formée entre la surface interne du manchon (3) et un embout (19b) en regard de l'extrémité libre du manchon.

8. Connecteur selon l'une des revendications précédentes, **caractérisé en ce que** le manchon (3) comporte une extrémité libre, communiquant avec le milieu environnant, et une extrémité sensiblement fermée autour de l'une des fibres (15).

9. Connecteur selon l'une des revendications précédentes, **caractérisé en ce que** l'une des fibres (15) comprend, à distance du connecteur, une extrémité comportant un capteur optique.

## Patentansprüche

1. Verbinder für optische Fasern (15, 18), insbesondere für Umgebungen unter hohem Druck (P), enthaltend Halteeinrichtungen (1, 2, 19b) für die jeweiligen Enden der Fasern im wesentlichen in Gegenüberstellung, weiterhin eine Hülse (3), die die Enden der Fasern umgibt, sowie ein im wesentlichen lichtdurchlässiges Gel (4), das in der Hülse angeordnet ist und ein Fließvermögen aufweist, das so ausgewählt ist, daß der die Enden der Fasern (15, 18) trennende Zwischenraum im wesentlichen ausgefüllt und gegenüber der Umgebung im wesentlichen abgedichtet wird, indem es sich in dem Zwischenraum (4b) hält, während der Umgebungsdruck auf wenigstens ein freies Ende der Hülse (3) einwirkt und dabei das Gel (4) im wesentlichen in der Hülse hält, **dadurch gekennzeichnet, daß** er Zentrieransätze (1, 19b) aufweist, die im wesentlichen hohlzylindrisch ausgebildet sind und jeweils unbeweglich das Ende einer Faser (15, 18) aufnehmen, und daß die Halteeinrichtungen einen Ring (2) enthalten, der im wesentlichen elastisch ist und einen Durchmesser hat, der wesentlich kleiner als die Durchmesser der Zentrieransätze (1, 19b) ist, um die jeweiligen Enden der Ansätze eng im wesentlichen einander gegenüberstehend aufzunehmen, während die Hülse (3) den genannten Ring (2) umgibt.

2. Verbinder nach Anspruch 1, **dadurch gekennzeichnet, daß** das Gel (4) einen Brechungsindex aufweist, der so gewählt ist, daß er die optischen Verluste eines Faserendes gegenüber dem anderen begrenzt.

3. Verbinder nach Anspruch 2, **dadurch gekennzeichnet, daß** das Gel (4) aus einem Material besteht, das Silikone enthält.

4. Verbinder nach einem der vorhergehenden Ansprüche, **dadurch gekennzeichnet, daß** der Ring eine im wesentliche hohlzylindrische Form aufweist.

5. Verbinder nach Anspruch 4, **dadurch gekennzeichnet, daß** der Ring (2) mit einer Öffnung (2a) versehen ist, die einen Durchgang für das Gel (4) bildet.

6. Verbinder nach Anspruch 5, **dadurch gekennzeichnet, daß** der Ring (2) einen Spalt (2a) aufweist, der sich im wesentlichen vom einen Ansatz (19b) zum anderen (1) erstreckt.

7. Verbinder nach einem der vorhergehenden Ansprüche, **dadurch gekennzeichnet, daß** der allgemeine Durchmesser der Hülse (3) derart gewählt ist, daß das Gel (4) sich wenigstens zwischen den jeweiligen Enden der Fasern (15, 18) und auch in einem Hohlraum, der mit der Umgebung in Verbindung ist und zwischen der inneren Oberfläche der Hülse (3) und einem Ansatz (19b) gegenüber dem freien Ende der Hülse ausgebildet ist, halten kann.

8. Verbinder nach einem der vorhergehenden Ansprüche, **dadurch gekennzeichnet, daß** die Hülse (3) ein freies Ende hat, das mit der Umgebung in Verbindung ist, und ein Ende hat, das um die eine der Fasern (15) im wesentlichen verschlossen ist.

9. Verbinder nach einem der vorhergehenden Ansprüche, **dadurch gekennzeichnet, daß** die eine der Fasern (15) im Abstand vom Verbinder ein Ende aufweist, das einen optischen Aufnehmer aufweist.

## Claims

1. Fibreoptic connector (15, 18), in particular for high-pressure environments (P), of the type comprising support means (1, 2, 19b) for the respective ends of the fibres, substantially opposite to one another, further comprising a sleeve (3) surrounding the ends of the fibres, as well as a substantially translucent gel (4) disposed in the sleeve and having a fluidity selected substantially to bathe the space (4b) separating the ends of the fibres (15, 18) and substantially sealing the said space (4b) from the surrounding medium by remaining within the space (4b), whereas the ambient pressure acts on at least one free end of the sleeve (3) by substantially keeping the gel (4) in the sleeve, **characterised in that** it comprises centring joining pieces (1, 19b) which are substantially hollow cylindrical and each housing immovably the end of a fibre (15, 18), and **in that** the support means comprise a substantially resilient ring (2) of a general diameter substantially smaller than the diameters of the centring joining pieces (1, 19b) in order to house tightly the respective ends of the joining pieces substantially opposite to one another, whereas the sleeve (3) surrounds the ring (2).

2. Connector according to claim 1, **characterised in that** the gel (4) is of refractive index selected to reduce optical losses from one fibre end to the other.

3. Connector according to claim 2, **characterised in that** the gel (4) is formed from a material comprising silicones.

4. Connector according to one of the preceding claims, **characterised in that** the ring is substantially of a hollow cylindrical shape.

5. Connector according to claim 4, **characterised in that** the ring (2) is equipped with an aperture (2a) forming a passage for the gel (4).

6. Connector according to claim 5, **characterised in that** the ring (2) has a slot (2a) extending substantially from one joining piece (19b) to the other (1).

7. Connector according to one of the preceding claims, **characterised in that** the general diameter of the sleeve (3) is so selected that the gel (4) is capable of being kept at least between the respective ends of the fibres (15, 18), as well as in a cavity communicating with the surrounding medium and formed between the inner face of the sleeve (3) and a joining piece (19b) opposite to the free end of the sleeve.

8. Connector according to one of the preceding claims, **characterised in that** the sleeve (3) has a free end communicating with the surrounding medium, and an end which is substantially closed around one of the fibres (15).

9. Connector according to one of the preceding claims, **characterised in that** one of the fibres (15) has, at a distance from the connector, an end comprising an optical sensor.
